# EUROPÄISCHE PATENTSCHRIFT

(11) **EP 1 518 098 B1**
(45) Veröffentlichungstag und Bekanntmachung des Hinweises auf die Patenterteilung: **11.10.2006**
(21) Anmeldenummer: 03737874.2
(22) Anmeldetag: 07.05.2003
(51) Int. Cl.: G01L 9/00

(54) **HOCHDRUCK-SENSOR MIT SILIZIUM-MEMBRAN UND LOTSCHICHT**
HIGH-PRESSURE SENSOR COMPRISING SILICON MEMBRANE AND SOLDER LAYER
CAPTEUR HAUTE PRESSION COMPRENANT UNE MEMBRANE DE SILICIUM ET UNE COUCHE DE BRASURE

(30) Priorität: 22.06.2002 DE 10228000
(43) Veröffentlichungstag der Anmeldung: 30.03.2005
(73) Patentinhaber: ROBERT BOSCH GMBH, 70442 Stuttgart (DE)
(72) Erfinder: MAST, Martin, 70839 Gerlingen (DE); ROGGE, Berthold, 70192 Stuttgart (DE); HABIBI, Masoud, 71701 Schwieberdingen (DE); KAISER, Ralf, 71549 Unterbruenden (DE)
(86) Internationale Anmeldenummer: PCT/DE2003/001463
(87) Internationale Veröffentlichungsnummer: WO 2004/001358

(56) Entgegenhaltungen:
- EP-A- 0 317 664
- EP-A- 0 936 455
- EP-A- 0 949 494
- DE-A- 3 436 440
- US-A- 4 918 992
- US-A1- 2002 073 533

## Beschreibung

### Stand der Technik

Die Erfindung betrifft eine Vorrichtung zur Druckmessung mit den Merkmalen des Oberbegriffs des unabhängigen Anspruchs 1.

Eine derartige Vorrichtung zur Druckmessung ist beispielsweise aus der DE 100 14 992 A1 bekannt. Der dort gezeigte Hochdrucksensor verwendet als Druckaufnehmer eine mit einer Ausnehmung versehene Druckmesszelle aus Metall. Sensorelemente und Messmembran sind an einer Seite der metallischen Druckmesszelle ausgebildet. Mit der gegenüberliegenden zweiten Seite ist die Druckmesszelle auf einen Anschlussstutzen der Sensorvorrichtung aufgeschweißt. Eine Auswerteschaltung ist auf einer separaten Leiterplatte oder einem Hybrid angeordnet und mit den Sensorelementen auf der Oberseite der Druckmesszelle elektrisch verbunden. Mit einer derartigen Vorrichtung lassen sich auch hohe Drücke oberhalb von 140 bar messen.

Weiterhin ist beispielsweise aus der DE 197 31 420 A1 eine Vorrichtung zur Druckmessung mit einem Silizium-Chip als Halbleiter-Druckaufnehmer bekannt, der auf seiner Oberseite mit Sensorelementen und einer Auswerteschaltung versehen ist und auf einen Glassockel aufgebracht ist. Derartige Drucksensoren werden jedoch nur zur Messung relativ kleiner Drücke unterhalb von 70 bar eingesetzt, da die bei größeren Drücken wirkenden mechanischen Spannungen zu Brüchen im Glas oder Silizium-Chip führen.

Aus der DE 34 36 440 A1 ist ein Silizium-Drucksensor bekannt, der einen Sensor-Chip aus Halbleitermaterial umfasst, der auf seiner ersten Seite Sensorelemente und eine Sensormembran aufweist und der auf einer der ersten Seite gegenüberliegenden zweiten Seite mit einer Ausnehmung versehen ist. Der Sensor-Chip ist auf einen mit einer Durchführungsöffnung versehenen Zwischenträger aus Silizium aufgebracht, der auf einen Zylinder oder ein Podest aufgelötet wird.

Aus der DE 26 30 640 ist eine piezoresistive Druckmesszelle bekannt, die ein Silizium-Plättchen aufweist, das auf seiner einen Seite mit einer Membran und einer integrierten Schaltung versehen ist und das auf der anderen Seite eine sacklochartige Ausnehmung aufweist. Das Silizium-Plättchen ist mittels eines Gold-Silizium-Eutektikum-Lötprozesses auf eine weitere Siliziumplatte aufgelötet ist, die mit einem Durchführungsrohr versehen ist, das mit der Ausnehmung in Verbindung steht.

### Vorteile der Erfindung

Die erfindungsgemäße Vorrichtung zur Druckmessung mit den Merkmalen des Anspruchs 1 ermöglicht vorteilhaft, einen Druckaufnehmer mit einem Halbleiterchip, auf dessen Oberseite Sensorelemente und beispielsweise zusätzlich eine Auswerteschaltung als integrierte Schaltung ausgebildet sind, zur Hochdruckmessung oberhalb von 70 bar zu verwenden. Der im Stand der Technik betriebene Aufwand zur Isolation der Sensorelemente von der metallischen Druckmesszelle bei herkömmlichen Hochdrucksensoren wird vermieden. Durch Kombination von Auswerteschaltung und Sensorelementen auf dem Halbleiterchip wird ein hoher Integrationsgrad der Vorrichtung erreicht. Durch direktes Auflöten des Halbleiterchips mit einem eine Ausnehmung des Halbleiterchips umgebenden Randbereich auf ein mit einem ersten Druckkanalabschnitt versehenes Trägerteil, wobei der erste Druckkanalabschnitt und die Ausnehmung miteinander in Verbindung stehen, wird eine hochdruckfeste Verbindung zwischen Halbleiterchip und Trägerteil erzeugt. Die Übertragung thermomechanischer Spannungen auf den Halbleiterchip wird vorteilhaft dadurch verringert, dass an einer Außenseite eines mit einer Durchgangsöffnung versehenen ersten Sensorgehäuseteils des Sensorgehäuses ein die Durchgangsöffnung abdeckender Anschlussstutzen als separates Bauteil festgelegt ist und das in dem Sensorgehäuse angeordnete Trägerteil durch die Durchgangsöffnung hindurch mit dem Anschlussstutzen, beispielsweise durch Laserschweißen, in Verbindung gebracht ist. Unerwünschte thermomechanische Spannungen zwischen dem Anschlussstutzen und dem Trägerteil werden durch diese Maßnahme erheblich verringert.

Vorteilhafte Ausführungsbeispiele und Weiterentwicklungen der Erfindung werden durch die in den abhängigen Ansprüchen angegebenen Merkmale ermöglicht.

Dadurch, dass an einer der Durchgangsöffnung zugewandten Seite des Anschlussstutzens ein umlaufender Kragen ausgebildet ist, welcher um einen in dem Anschlussstutzen ausgebildeten zweiten Druckkanalabschnitt herum angeordnet ist, und dass das Trägerteil an seiner dem Anschlussstutzen zugewandten Seite einen in den Kragen eingreifenden Stutzen aufweist, in dem der erste Druckkanalabschnitt verläuft, lassen sich vorteilhaft thermomechanische Spannungen zwischen dem Anschlussstutzen und dem Trägerteil noch weiter reduzieren. Besonders vorteilhaft in diesem Zusammenhang ist, wenn der Stutzen einen Außendurchmesser aufweist der deutlich kleiner als der Außendurchmesser des Trägerteils ist, so dass nur ein kleiner Verbindungsbereich von Trägerteil und Anschlussstutzen besteht.

Der Druckaufnehmer kann einstückig aus einem Halbleitermaterial wie Silizium gebildet sein. Besonders vorteilhaft ist es einen Stapelaufbau zu verwenden aus einer mit der Sensormembran und den Sensorelementen versehen ersten Halbleiterstruktur und einer damit über eine Verbindungszone fest verbundenen und auf das Trägerteil aufgelöteten zweiten Halbleiterstruktur. Durch die zweite Halbleiterstruktur wird weitgehend vermieden, dass thermomechanische Spannungsbelastungen die Sensorelemente erreichen und beschädigen. Dadurch lässt sich die Zuverlässigkeit und Lebensdauer der Vorrichtung erhöhen. Die erste Halbleiterstruktur und die zweite Halbleiterstruktur können vorteilhaft aus Silizium bestehen. Die Verbindungszone kann aus einer eutektischen Zone aus Gold und Silizium bestehen.

Zur Vermeidung von thermischen Spannungen zwischen dem Halbleiterchip und dem Trägerteil ist es vorteilhaft, wenn die Lotschicht einen kleineren thermischen Ausdehnungskoeffizienten aufweist als Zinn-Blei-Lot, der besser an das Halbleitermaterial angepasst ist. Vorteilhaft ist beispielsweise die Verwendung von AuSn20-Lot.

Das Trägerteil weist vorteilhaft einen an das Halbleitermaterial des Druckaufnehmers angepassten thermischen Ausdehnungskoeffizienten auf. Das Trägerteil kann aus einer Metalllegierung, beispielsweise aus Eisen-Nickel (Invar®) oder Eisen-Nickel-Kobalt (Kovar®) bestehen.

Besonders vorteilhaft ist es, wenn die Ausnehmung in dem Halbleiter-Druckaufnehmer durch reaktives Ionen-Ätzen (Trench-Ätzen) an dem Druckaufnehmer ausgebildet ist. Hierdurch werden scharfe Übergänge und Knicke in dem Halbleiter-Druckaufnehmer vermieden, an denen sich bei hohen Druckbelastungen Spannungen bilden, die zur Bruchbildung führen.

In einem weiteren vorteilhaften Ausführungsbeispiel kann vorgesehen sein, dass der Druckaufnehmer, das Trägerteil und ein auf das Trägerteil aufgesetztes Deckelteil als Druckaufnehmermodul ausgebildet sind, wobei das Deckelteil und das Trägerteil ein geschlossenes den Druckaufnehmer bergendes Modulgehäuse bilden und an dem Trägerteil ein Stutzen befestigt ist oder einstückig damit verbunden ist, in welchem der erste Druckkanalabschnitt verläuft. Der modulare Aufbau hat den Vorteil, dass beim Kalibrieren des Druckaufnehmers als nicht funktionsfähig aussortierte Drucksensormodule vor Einbau in das eigentliche Sensorgehäuse aussortiert werden können.

### Zeichnungen

Ausführungsbeispiele der Erfindung sind in den Zeichnungen dargestellt und werden in der nachfolgenden Beschreibung erläutert. Es zeigt
Fig. 1 einen Querschnitt durch ein erstes Ausführungsbeispiel der Erfindung,
Fig. 2 einen Querschnitt durch das Ausführungsbeispiel aus Fig. 1 längs der Linie II-II in Fig. 1,
Fig. 3 ein vergrößertes Detail aus Fig. 1,
Fig. 4 ein vergrößertes Detail für ein weiteres Ausführungsbeispiel,
Fig. 5 ein als Drucksensormodul ausgebildetes weiteres Ausführungsbeispiel der Erfindung,
Fig. 6 einen Drucksensor mit einem darin angeordneten Drucksensormodul aus Fig. 5.

### Beschreibung der Ausführungsbeispiele

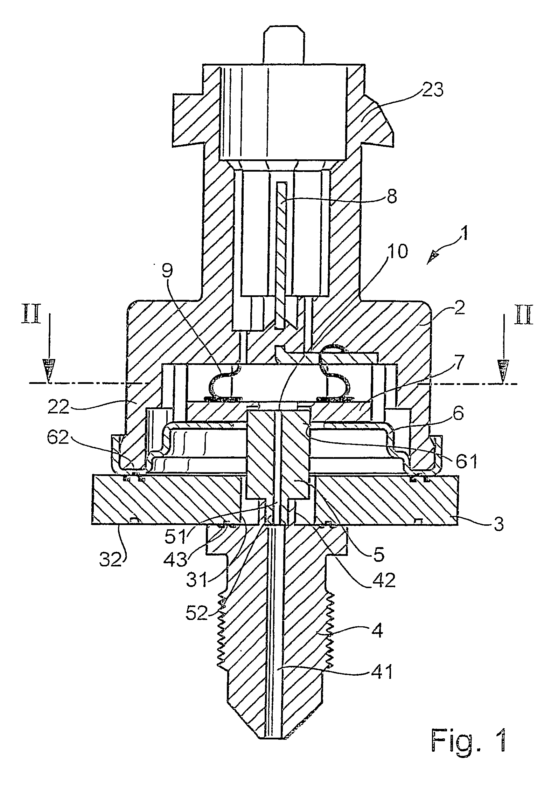

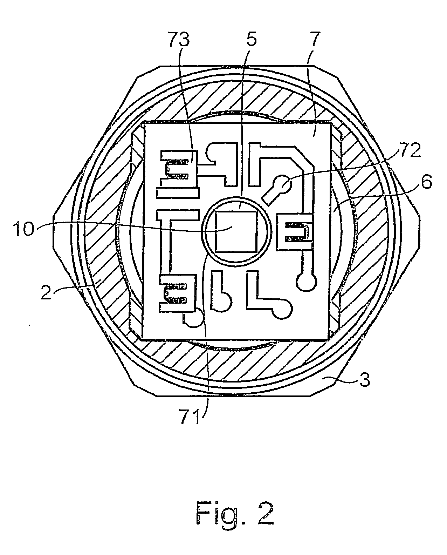

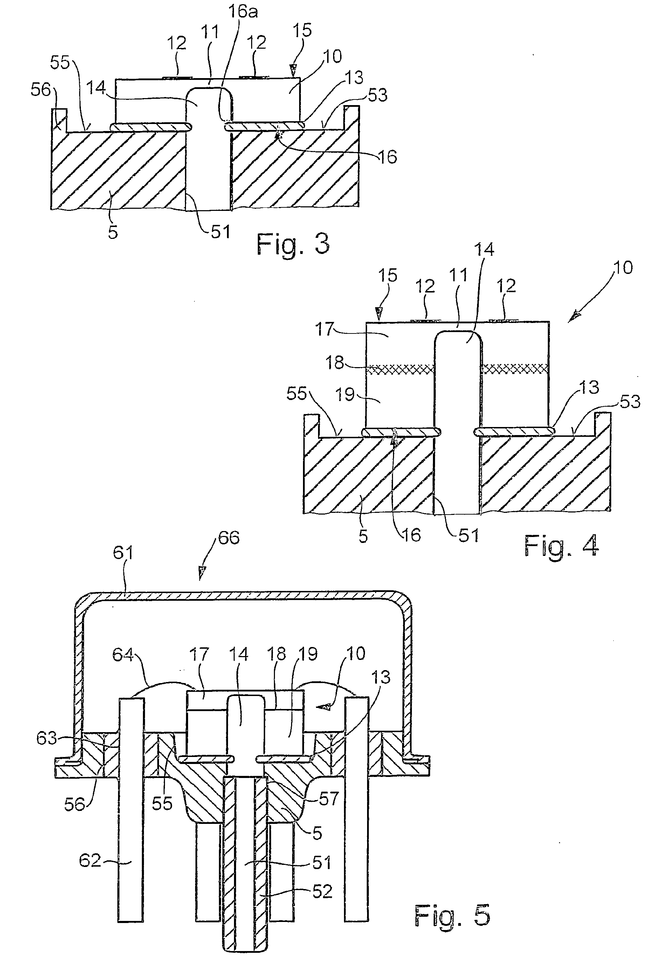

Fig. 1 und Fig. 2 zeigen ein erstes Ausführungsbeispiel der erfindungsgemäßen Vorrichtung zur Druckmessung. Ein Halbleiter-Druckaufnehmer 10 ist auf ein sockelförmiges Trägerteil 5 aufgelötet. Eine vergrößerte Detailansicht des auf den Sockel 5 aufgelöteten Halbleiterdruck-Aufnehmers ist in Fig. 3 dargestellt. Der Halbleiterdruck-Aufnehmer 10 ist vorzugsweise als Siliziumchip ausgebildet und auf der Oberseite 15 mit Sensorelementen 12 versehen. Ein zentraler Abschnitt an der Oberseite, welcher eine in die Unterseite eingebrachte Ausnehmung 14 überspannt, dient als Sensormembran 11, wobei die Sensorelemente 12 aus einer Druckbelastung der dünnen Sensormembran 11 resultierende Verformungen derselben erfassen. Zusätzlich zu den Sensorelementen 12 kann noch eine nicht dargestellte Auswerteschaltung auf der Oberseite 15 des Halbleiter-Druckaufnehmers 10 um die Sensormembran 11 herum angeordnet sein. Die Ausnehmung 14 ist vorzugsweise durch reaktives Ionenätzen (Trench-Ätzen) in den Druckaufnehmer eingebracht, wodurch an der Innenwandung der Ausnehmung 14 weiche Übergänge entstehen und scharfe Kanten vermieden werden, an denen sich bei hohen Druckbelastungen Brüche ausbilden könnten. Der Halbleiter-Druckaufnehmer ist mit einem die Ausnehmung 14 umgebenden Randbereich 16a der Unterseite 16 auf die Oberseite 55 des Trägerteils 5 direkt aufgelötet. Die Oberseite 55 ist mit einem umlaufenden Kragen 56 zur Zentrierung des Druckaufnehmers 10 umgeben.

Um thermische Spannungen zwischen Halbleiter-Druckaufnehmer 10 und Trägerteil 5 zu reduzieren, ist das Trägerteil 5 aus einem an den Ausdehnungskoeffizienten von Silizium angepassten Material und vorzugsweise aus einer Eisen-Nickel-Legierung (Invar®) oder Eisen-Nickel-Kobalt-Legierung (Kovar®) hergestellt. Die Lotschicht 13 zwischen dem Halbleiter-Druckaufnehmer 10 und dem Trägerteil 5 weist einen sehr kleiner Ausdehnungskoeffizienten auf, der vorzugsweise deutlich kleiner als der Ausdehnungskoeffizient von herkömmlichen Zinn-Blei-Lot ist. Besonders vorteilhaft ist die Verwendung von AuSn20-Lot. Wie in Fig. 3 zu erkennen ist, steht die Ausnehmung 14 mit einem in dem Trägerteil 5 angeordneten ersten Druckkanalabschnitt 51 in Verbindung, so dass die der Ausnehmung 14 zugewandte Unterseite der Sensormembran 11 über den ersten Druckkanalabschnitt 51 mit Druck beaufschlagbar ist.

In einem weiteren Ausführungsbeispiel ist vorgesehen, dass der Halbleiter-Druckaufnehmer 10 eine erste Halbleiterstruktur 17 aufweist, auf deren Oberseite 15 die Sensorelemente 12 angeordnet sind und die auf ihrer von den Sensorelementen 12 abgewandten Seite mit einer zweiten Halbleiterstruktur 19 verbunden ist. Beide Halbleiterstrukturen können aus Silizium gebildet sein, wobei die Verbindungszone 18 der beiden Halbleiterstrukturen vorzugsweise aus einer euktektischen Zone aus Gold und Silizium besteht. Die zweite Halbleiterstruktur 19 wird mit ihrer von der ersten Halbleiterstruktur 17 abgewandten Seite 16 auf das Trägerteil 5 aufgelötet. Besonders vorteilhaft an dieser Ausführungsform ist, dass die zweite Halbleiterstruktur als Schutzschicht für die erste Halbleiterstruktur wirkt. Thermomechanische Belastungen werden vom Trägerteil zunächst nur auf die zweite Halbleiterstruktur übertragen. Vorteilhaft werden hierdurch die Sensorelemente 12 und die Sensormembran 11 geschützt.

Wie weiter in Fig. 1 zu erkennen ist, wird das sockelartige Trägerteil 5 mit seiner von dem Halbleiter-Druckaufnehmer 10 abgewandten Seite mit einem metallischen Anschlussstutzen 4 aus beispielsweise Edelstahl durch Laserschweißen verbunden. Der Anschlussstutzen 4 ist als Schraubanschluss ausgebildet und wird als separates Bauteil auf die Außenseite 32 eines metallischen ersten Sensorgehäuseteils 3 aufgeschweißt, so dass der Anschlussstutzen 4 eine zentrale Durchgangsöffnung 31 in dem ersten Sensorgehäuseteil 3 überdeckt. Die Umfangswand des ersten Sensorgehäuseteils 3 bildet einen Sechskant, wie am besten in Fig. 2 zu erkennen ist.

Das etwas zylinderförmig ausgebildete Trägerteil 5 weist einen kleineren Durchmesser als die Durchgangsöffnung 31 auf. An einer von dem Halbleiter-Druckaufnehmer 10 abgewandten Seite des Trägerteils 5 ist ein Stutzen 52 ausgebildet, in dem der ersten Druckkanalabschnitt 51 zentrisch eingelassen ist. Der Anschlussstutzen 4 weist an seiner der Durchgangsöffnung 31 zugewandten Seite einen umlaufenden Kragen 42 auf, der an dieser Seite um einen in dem Anschlussstutzen 4 angeordneten zweiten Druckkanalabschnitt 41 umlaufend angeordnet ist. Das Trägerteil 5 wird mit dem Stutzen 52 in den Kragen 42 eingeschoben und mit diesem verschweißt. Anschließend kann das Trägerteil 5 durch die Durchgangsöffnung 31 des ersten Sensorgehäuseteils 3 geschoben werden und der Anschlussstutzen mit der Außenseite 32 des ersten Sensorgehäuseteils 3 im Bereich 43 verschweißt werden. Im Betrieb erfolgt die Druckzuführung vom zweiten Druckkanalabschnitt 41 in den ersten Druckkanalabschnitt 51 und von dort in die Ausnehmung 14 an der Unterseite des Halbleiter-Druckaufnehmers.

In dem hier gezeigten Ausführungsbeispiels ist noch ein Stanzbiegeteil 6 vorgesehen, welches auf die von der Außenseite 32 abgewandte Seite des ersten Sensorgehäuseteils 3 aufgeschweißt ist. Das Stanzbiegeteil 6 weist eine Öffnung 61 auf, durch welche das Trägerteil 5 geführt ist. Auf die von dem ersten Sensorgehäuseteil 3 abgewandte Seite des Stanzbiegeteils 6 ist eine Leiterplatte 7 oder ein Hybrid oder entsprechendes Teil aufgebracht, welches eine Ausnehmung 71 aufweist, durch die das Trägerteil 5 ebenfalls durchgeführt ist. Der Halbleiter-Druckaufnehmer 10 ist über nicht dargestellte Bonddrähte mit den Leiterbahnen 72 auf der Leiterplatte 7 verbunden. Anschlussflächen 73 der Leiterplatten 7 sind über Kontaktfederelemente 9 mit elektrischen Anschlusselementen 8 verbunden, die in einem aus beispielsweise Kunststoff gebildeten zweiten Sensorgehäuseteil 2 angeordnet sind, welches auf das Stanzbiegeteil 6 aufgesetzt wird. In dem in Fig. 1 gezeigten Ausführungsbeispiel ist das Stanzbiegeteil 6 so gebogen, dass die mit den Leiterbahnen versehene Oberseite der auf das Stanzbiegeteil aufgesetzten Leiterplatte in etwa bündig mit der Oberseite des Druckaufnehmers 10 angeordnet ist. Die Anschlusselemente 8 sind von einem Stecker 23 ins Innere des Sensorgehäuses 1 geführt. Der äußere Bereich des Stanzbiegeteils weist eine nutförmige Kontur 62 auf, in welche eine zylinderförmige Wand 22 des zweiten Sensorgehäuseteils 2 eingreift. Über ein Dichtklebung in der Kontur 62 wird das zweite Sensorgehäuseteil 2 gegen das Stanzbiegeteil 6 abgedichtet. Das erste Sensorgehäuseteil 3, das zweite Sensorgehäuseteil 2, das dazwischen angeordnete Stanzbiegeteil 6 und der Anschlussstutzen 4 bilden ein geschlossenes Sensorgehäuse 1, in dem das Trägerteil 5 und der Druckaufnehmer 10 angeordnet sind.

Das zweite Sensorgehäuseteil 2 kann auch direkt mit dem ersten Sensorgehäuseteil 3 verbunden werden und das Stanzbiegeteil 6 entfallen. Weiterhin ist es möglich, die Öffnung 61 in dem Stanzbiegeteil 6 zu vergrößern und das Stanzbiegeteil ringförmig auszubilden und die Leiterplatte 7 auf das erste Sensorgehäuseteil 3 so aufzusetzen, dass die Leiterplatte die vergrößerte Öffnung in dem Stanzbiegeteil durchgreift.

Ein weiteres Ausführungsbeispiel der Vorrichtung zur Druckmessung ist in Fig. 5 dargestellt. Bei diesem Ausführungsbeispiel bildet das metallische Trägerteil 5 den Gehäuseboden eines Modulgehäuses, in welchem der Halbleiter-Druckaufnehmer 10 angeordnet ist. Der Halbleiter-Druckaufnehmer 10 ist hier analog zur dem Ausführungsbeispiel aus Fig. 4 aus zwei Halbleiterstrukturen aufgebaut und mit der zweiten Halbleiterstruktur 19 in einer Vertiefung 55 auf das Trägerteil 5 aufgelötet. Stiftförmige elektrische Kontaktelemente 62 sind in Glasdurchführungen 63 eingeschmolzen, welche Glasdurchführungen in Durchgangsöffnungen 56 des Trägerteils 5 angeordnet sind. In einer zentrischen Öffnung 57 des Trägerteils 5 ist ein rohrförmiger zylindrischer Stutzen 52 angeordnet, in welchem der erste Druckkanalabschnitt 51 verläuft. Der Stutzen 52 kann aber auch einstückig mit dem Trägerteil ausgebildet sein. Der Druckaufnehmer 10 ist über Bonddrähte 64 mit den stiftförmigen Kontaktelementen 62 kontaktiert. Ein auf das Trägerteil 5 aufgesetztes Deckelteil 61 bildet zusammen mit dem Trägerteil 5 ein geschlossenes Modulgehäuse 66. Vorteilhaft kann ein Referenzdruckvolumen (beispielsweise Vakuum) zwischen Deckelteil 61 und Trägerteil 5 eingeschlossenen werden, so dass der Druckaufnehmer 10 einen Referenzdruck misst.

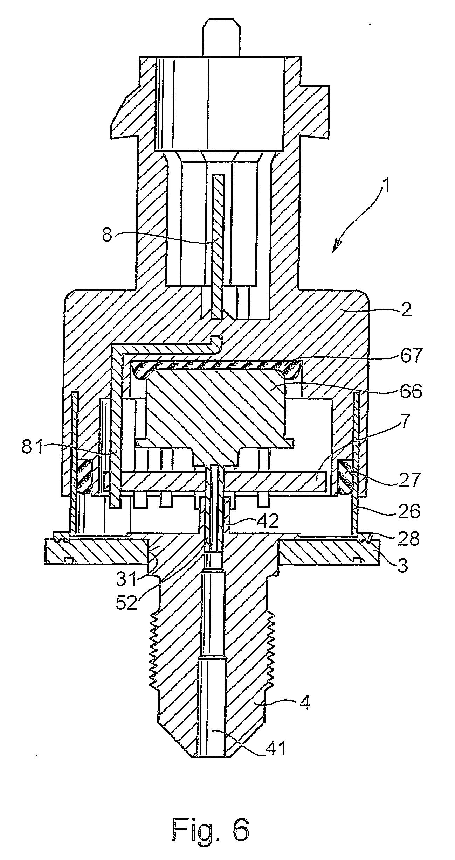

Das in Fig. 5 dargestellte Druckaufnehmermodul 66 kann, wie in Fig. 6 dargestellt, in ein Sensorgehäuse 1 eingebaut werden. Dabei wird das Druckaufnehmermodul 66 auf eine Leiterplatte 7 aufgesetzt. Die elektrischen Kontaktelemente 62 werden mit Leiterbahnen der Leiterplatte 7 beispielsweise durch Löten verbunden, während der Stutzen 52 durch eine Öffnung der Leiterplatte hindurchgeführt ist und in einen Kragen 42 eines Anschlussstutzens 4 des Sensorgehäuses 1 eingesetzt ist und wie bei dem Ausführungsbeispiels aus Fig. 1 damit verschweißt ist. Der Anschlussstutzen 4 ist an einem ersten Sensorgehäuseteil 3 angeordnet. Ein zweites Sensorgehäuseteil 2 aus Kunststoff ist mit einer etwa zylinderförmigen Metallhülse 26 verbunden, deren von dem zweiten Sensorgehäuseteil 2 abstehendes Ende einen umgebogenen Rand 28 aufweist, der mit dem ersten Sensorgehäuseteil 3 verschweißt ist. Ein Dichtkleber 27 dichtet den Verbindungsbereich von Metallhülse 26 und erstem Sensorgehäuseteil 2 ab. Die elektrischen Anschlusselemente 8 sind durch das zweite Sensorgehäuseteil 2 in den Innenraum des Sensorgehäuses 1 geführt und mit der Leiterplatte 7 elektrischen verbunden. Ein Kleber 67 verbindet das Deckelteil 61 des Drucksensormoduls 66 mit der Innenseite des zweiten Sensorgehäuseteils 2.

## Patentansprüche

1. Vorrichtung zur Druckmessung, insbesondere zur Hochdruckmessung, mit einem in einem Sensorgehäuse (1) angeordneten Halbleiter-Druckaufnehmer (10), der auf einer ersten Seite (15) Sensorelemente (12) und eine Sensormembran (11) aufweist und auf einer der ersten Seite gegenüberliegenden zweite Seite (16) mit einer Ausnehmung (14) versehen ist, die sich von der zweiten Seite (16) aus bis zu der Sensormembran (11) erstreckt, wobei der Halbleiter-Druckaufnehmer mit einem die Ausnehmung (14) umgebenden Randbereich (16a) der zweiten Seite (16) direkt auf ein mit einem ersten Druckkanalabschnitt (51) versehenes Trägerteil (5) mittels einer Lotschicht (13) derart aufgelötet ist, dass der erste Druckkanalabschnitt (51) und die Ausnehmung (14) miteinander in Verbindung stehen, **dadurch gekennzeichnet, dass** an einer Außenseite (32) eines mit einer Durchgangsöffnung (31) versehenen ersten Sensorgehäuseteils (3) des Sensorgehäuses (1) ein die Durchgangsöffnung (31) abdeckender Anschlussstutzen (4) festgelegt ist und das in dem Sensorgehäuse angeordnete Trägerteil (5) durch die Durchgangsöffnung (31) hindurch mit dem Anschlussstutzen (4) in Verbindung gebracht ist.

2. Vorrichtung nach Anspruch 1, **dadurch gekennzeichnet, dass** das Trägerteil (5) mit dem Anschlussstutzen (4) verschweißt ist.

3. Vorrichtung nach Anspruch 1 oder 2, **dadurch gekennzeichnet, dass** an einer der Durchgangsöffnung (31) zugewandten Seite des Anschlussstutzens (4) ein umlaufender Kragen (42) um einen in dem Anschlussstutzen (4) ausgebildeten zweiten Druckkanalabschnitt (41) herum angeordnet ist und das Trägerteil (5) an seiner dem Anschlussstutzen (4) zugewandten Seite einen in den Kragen (42) eingreifenden Stutzen (52) aufweist, in dem der erste Druckkanalabschnitt (51) verläuft.

4. Vorrichtung nach Anspruch 3, **dadurch gekennzeichnet, dass** der Stutzen (52) einen Außendurchmesser aufweist der deutlich kleiner als der Außendurchmesser des Trägerteils (5) ist.

5. Vorrichtung nach Anspruch 1, **dadurch gekennzeichnet, dass** der Druckaufnehmer (10) einstückig aus einem Halbleitermaterial gebildet ist.

6. Vorrichtung nach Anspruch 1, **dadurch gekennzeichnet, dass** der Druckaufnehmer (10) einen Stapelaufbau aufweist mit einer mit der Sensormembran (11) und den Sensorelementen (12) versehen ersten Halbleiterstruktur (17) und einer damit über eine Verbindungszone (18) fest verbundenen und auf das Trägerteil (5) aufgelöteten zweiten Halbleiterstruktur (19).

7. Vorrichtung nach Anspruch 6, **dadurch gekennzeichnet, dass** die erste Halbleiterstruktur (17) und die zweite Halbleiterstruktur (19) aus Silizium bestehen und die Verbindungszone (18) durch eine eutektische Zone aus Gold und Silizium gebildet wird.

8. Vorrichtung nach Anspruch 5 oder 6, **dadurch gekennzeichnet, dass** die Lotschicht (13) einen kleineren thermischen Ausdehnungskoeffizienten aufweist als Zinn-Blei-Lot.

9. Vorrichtung nach Anspruch 5 oder 6, **dadurch gekennzeichnet, dass** das Trägerteil (5) einen an das Halbleitermaterial des Druckaufnehmers (10) angepassten thermischen Ausdehnungskoeffizienten besitzt.

10. Vorrichtung nach Anspruch 8, **dadurch gekennzeichnet, dass** die Lotschicht (13) aus AuSn20 besteht.

11. Vorrichtung nach Anspruch 9, **dadurch gekennzeichnet, dass** das Trägerteil (5) aus einer an den Ausdehnungskoeffizienten von Silizium angepassten Material und vorzugsweise aus einer Eisen-Nickel-Legierung oder Eisel-Nickel-Kobalt-Legierung gebildet wird.

12. Vorrichtung nach einem der vorstehenden Ansprüche, **dadurch gekennzeichnet, dass** die Ausnehmung (14) durch reaktives Ionen-Ätzen an dem Druckaufnehmer ausgebildet ist.

13. Vorrichtung nach einem der vorstehenden Ansprüche, **dadurch gekennzeichnet, dass** der Druckaufnehmer (10), das Trägerteil (5) und ein auf das Trägerteil (5) aufgesetztes Deckelteil (61) als Druckaufnehmermodul (66) ausgebildet sind, wobei das Deckelteil (61) und das Trägerteil (5) ein geschlossenes den Druckaufnehmer (10) bergendes Modulgehäuse bilden und an dem Trägerteil (5) ein Stutzen (52) befestigt ist oder einstückig damit verbunden ist, in welchem der erste Druckkanalabschnitt (51) verläuft.

## Claims

1. Device for measuring pressure, in particular for measuring high pressure, comprising a semiconductor pressure transducer (10), which is arranged in a sensor housing (1) and has on a first side (15) sensor elements (12) and a sensor membrane (11) and is provided on a second side (16), opposite from the first side, with a recess (14), which extends from the second side (16) to the sensor membrane (11), the semiconductor pressure transducer being soldered by a peripheral region (16a) of the second side (16), surrounding the recess (14), directly on a support part (5), provided with a first pressure channel portion (51), by means of a solder layer (13) in such a way that the first pressure channel portion (51) and the recess (14) are in connection with each other, **characterized in that**, on an outer side (32) of a first sensor housing part (3) of the sensor housing (1), provided with a through-opening (31), a connection piece (4), covering the through-opening (31), is fixed and the support part (5), arranged in the sensor housing, is brought into connection with the connection piece (4) through the through-opening (31).

2. Device according to Claim 1, **characterized in that** the support part (5) is welded to the connection piece (4).

3. Device according to Claim 1 or 2, **characterized in that**, on a side of the connection piece (4) facing the through-opening (31), a peripheral collar (42) is arranged around a second pressure channel portion (41), formed in the connection piece (4), and the support part (5) has on its side facing the connection piece (4) a connector (52), which engages in the collar (42) and in which the first pressure channel portion (51) extends.

4. Device according to Claim 3, **characterized in that** the connector (52) has an outside diameter which is significantly smaller than the outside diameter of the support part (5).

5. Device according to Claim 1, **characterized in that** the pressure transducer (10) is formed in one piece from a semiconductor material.

6. Device according to Claim 1, **characterized in that** the pressure transducer (10) is constructed in the form of a stack, with a first semiconductor structure (17), provided with the sensor membrane (11) and the sensor elements (12), and a second semiconductor structure (19), firmly connected to the said first structure by means of a connecting zone (18) and soldered on the support part (5).

7. Device according to Claim 6, **characterized in that** the first semiconductor structure (17) and the second semiconductor structure (19) consist of silicon and the connecting zone (18) is formed by a eutectic zone of gold and silicon.

8. Device according to Claim 5 or 6, **characterized in that** the solder layer (13) has a smaller coefficient of thermal expansion than tin-lead solder.

9. Device according to Claim 5 or 6, **characterized in that** the support part (5) has a coefficient of thermal expansion that is adapted to the semiconductor material of the pressure transducer (10).

10. Device according to Claim 8, **characterized in that** the solder layer (13) consists of AuSn20.

11. Device according to Claim 9, **characterized in that** the support part (5) is formed from a material that is adapted to the coefficient of expansion of silicon and preferably from an iron-nickel alloy or iron-nickel-cobalt alloy.

12. Device according to one of the preceding claims, **characterized in that** the recess (14) is formed on the pressure transducer by reactive ion etching.

13. Device according to one of the preceding claims, **characterized in that** the pressure transducer (10), the support part (5) and a cover part (61) placed on the support part (5) are formed as a pressure transducer module (66), the cover part (61) and the support part (5) forming a closed module housing, holding the pressure transducer (10), and a connector (52), in which the first pressure channel portion (51) extends, being fastened to the support part (5) or integrally connected to it.

## Revendications

1. Dispositif de mesure de pression, notamment de mesure de haute pression, comportant dans un boîtier de capteur (1) un capteur de pression semi-conducteur (10) présentant sur une première face (15) des éléments de capteur (12) et une membrane de capteur (11), et sur une seconde face (16) opposée à la première face, un évidement (14) qui s'étend de la seconde face (16) jusqu'à la membrane de capteur (11), le capteur de pression semi-conducteur ayant une zone de bordure (16a) de la seconde face (16) entourant l'évidement (14) brasée directement sur un élément de support (5) pourvu d'une première section de canal de refoulement (51), au moyen d'une couche de brasure (13), de telle sorte que la première section de canal de refoulement (51) et l'évidement (14) communiquent l'un avec l'autre,
**caractérisé en ce qu'**
un raccord (4) recouvrant l'ouverture de passage (31) est fixé sur une face extérieure (32) d'une première partie (3) du boîtier de capteur (1) pourvue d'une ouverture de passage (31) et l'élément de support (5) disposé dans le boîtier de capteur est mis en contact avec le raccord (4) en traversant l'ouverture de passage (31).

2. Dispositif selon la revendication 1,
**caractérisé en ce que**
l'élément de support (5) est soudé sur le raccord (4).

3. Dispositif selon la revendication 1 ou 2,
**caractérisé en ce que**
sur une face du raccord (4) tournée vers l'ouverture de passage (31), un collier (42) périphérique est disposé autour d'un second segment de canal de refoulement (41) formé dans le raccord (4), et l'élément de support (5) présente sur sa face tournée vers le raccord (4), une tubulure (52) qui s'engage dans le collier (42) et dans laquelle s'étend le premier segment de canal de refoulement (51).

4. Dispositif selon la revendication 3,
**caractérisé en ce que**
la tubulure (52) a un diamètre extérieur sensiblement plus petit que le diamètre extérieur de l'élément de support (5).

5. Dispositif selon la revendication 1,
**caractérisé en ce que**
le capteur de pression (10) est conçu d'une seule pièce dans un matériau semi-conducteur.

6. Dispositif selon la revendication 1,
**caractérisé en ce que**
le capteur de pression (10) présente une construction à empilage comportant une première structure semi-conductrice (17) pourvue de la membrane de capteur (11) et des éléments de capteur (12), et comportant une seconde structure semi-conductrice (19) fixée fermement à la première structure via une zone de liaison (18) et brasée sur l'élément de support (5).

7. Dispositif selon la revendication 6,
**caractérisé en ce que**
la première structure semi-conductrice (17) et la seconde structure semi-conductrice (19) se composent de silicium et la zone de liaison (18) est formée par une zone eutectique d'or et de silicium.

8. Dispositif selon la revendication 5 ou 6,
**caractérisé en ce que**
la couche de brasure (13) présente un coefficient de dilatation thermique plus petit que celui d'une brasure étain-plomb.

9. Dispositif selon la revendication 5 ou 6,
**caractérisé en ce que**
l'élément de support (5) possède un coefficient de dilatation thermique adapté au matériau semi-conducteur du capteur de pression (10).

10. Dispositif selon la revendication 8,
**caractérisé en ce que**
la couche de brasure (13) se compose de AuSn20.

11. Dispositif selon la revendication 9,
**caractérisé en ce que**
l'élément de support (5) est formé dans un matériau adapté au coefficient de dilatation du silicium et de préférence à partir d'un alliage fer-nickel ou fer-nickel-cobalt.

12. Dispositif selon l'une quelconque des revendications précédentes,
**caractérisé en ce que**
l'évidement (14) est formé sur le capteur de pression par gravure ionique réactive.

13. Dispositif selon l'une quelconque des revendications précédentes,
**caractérisé en ce que**
le capteur de pression (10), l'élément de support (5) et un élément de couvercle (61) assemblé sur l'élément de support (5) sont conçus comme module de capteur de pression (66), l'élément de couvercle (61) et l'élément de support (5) forment un boîtier fermé protégeant le capteur de pression (10), et une tubulure (52) est fixée sur l'élément de support (5) ou y est reliée d'un seul tenant, le premier segment de canal de refoulement (51) s'étendant à l'intérieur de celle-ci.
